# EUROPEAN PATENT SPECIFICATION

(11) **EP 1 485 202 B1**
(45) Date of publication and mention of the grant of the patent: **01.07.2009**
(21) Application number: 03719378.6
(22) Date of filing: 11.03.2003
(51) Int. Cl.: B01J 23/60, C01B 3/58, H01M 8/06

(54) **Process for the preferential oxidation of carbon monoxide using a catalyst containing ruthenium and zinc oxide**
Verfahren für die selektive Oxidation von Kohlenmonoxid an einem Ruthenium und Zinkoxid enthaltenden Katalysator
Procédé d'oxydation préférentielle de monoxyde de carbone utilisant un catalyseur contenant du ruthénium et de l'oxyde de zinc

(30) Priority: 18.03.2002 US 100472
(43) Date of publication of application: 15.12.2004
(73) Proprietor: BASF Catalysts LLC, Florham Park, NJ 07932 (US)
(72) Inventor: SHORE, Lawrence, Edison, NJ 08817 (US); RUETTINGER, Wolfgang, F., East Windsor, NJ 08520 (US); FERRAUTO, Robert, J., Princeton, NJ 08540 (US)
(74) Representative: Fisher, Adrian John
(86) International application number: PCT/US2003/007521
(87) International publication number: WO 2003/080238

(56) References cited:
- EP-A- 1 038 832
- US-A- 3 904 554
- US-A- 4 005 177
- US-A- 4 177 219
- US-A- 4 551 556
- US-B1- 6 190 430

## Description

The preset invention relates to methods for the use of ruthenium-based catalyst compositions for the selective oxidation of carbon monoxide from a hydrogen stream, and in particular to the selective oxidation of carbon monoxide in a hydrogen feed stream fed to a fuel cell, particularly to a proton exchange membrane (PEM) fuel cell.

Fuel cells directly convert chemical energy into electricity thereby eliminating the mechanical process steps that limit thermodynamic efficiency, and have been proposed as a power source for many applications. The fuel cell can be two to three times as efficient as the internal combustion engine with little, if any, emission of primary pollutants such as carbon monoxide, hydrocarbons and-nitric oxides. Fuel cell-powered vehicles which reform hydrocarbons to power the fuel cell generate less carbon dioxide (green house gas) and have enhanced fuel efficiency.

Fuel cell processors (also known as fuel cell reformers) supply a hydrogen-containing gas stream to the fuel cell. Fuel cell processors include reactors that steam reform hydrocarbon feedstocks (e.g., natural gas, LPG) and hydrocarbon derivatives (e.g., alcohols) to produce a process stream enriched in hydrogen. Other by-products from the steam reforming of hydrocarbon include carbon monoxide and carbon dioxide. For example, methane is converted to hydrogen, carbon monoxide and carbon dioxide by the two reactions below:

CH₄ + H₂O → 3H₂ +CO

CH₄ +2H₂O → 4H2 + CO₂

The resulting gas is then reacted in the water-gas shift reactor where the process stream is further enriched in hydrogen by reaction of carbon monoxide in the water-gas shift reaction:

CO + H₂O ⇄ CO₂ + H₂

Fuel cells, including PEM fuel cells [also called solid polymer electrolyte or (SPE) fuel cells], generate electrical power in a chemical reaction between a reducing agent (hydrogen) and an oxidizing agent (oxygen) which are fed to the fuel cells. A PEM fuel cell includes an anode and a cathode separated by a membrane which is usually an ion exchange resin membrane. The anode and cathode electrodes are typically constructed from finely divided carbon particles, catalytic particles supported on the carbon particles and proton conductive resin intermingled with the catalytic and carbon particles. In typical PEM fuel cell operation, hydrogen gas is electrolytically oxidized to hydrogen ions at the anode composed of platinum reaction catalysts deposited on a conductive carbon electrode. The protons pass through the ion exchange resin membrane, which can be a fluoropolymer of sulfonic acid called a proton exchange membrane. H₂O is produced when protons then combine with oxygen that has been electrolytically reduced at the cathode. The electrons flow through an external circuit in this process to do work, creating an electrical potential across the electrodes. Examples of membrane electrode assemblies and fuel cells are described in United States Patent No. 5,272,017.

The platinum electrodes at the anode of the PEM fuel cells are extremely sensitive to carbon monoxide in the hydrogen feed stream supplied to the fuel cell. Even levels below 100 ppm of carbon monoxide can coat the platinum electrodes and consequently, adversely affect fuel cell performance. It is therefore desirable to reduce the levels of carbon monoxide in the hydrogen feed stream supplied to the fuel cell to as low a level as practical. Preferably, the level of carbon monoxide in the hydrogen feed stream ultimately supplied to the fuel cell is below 100 ppm, more preferably the level is below 10 ppm.

The bulk of the carbon monoxide in the fuel processor is converted to H₂ and water in the water-gas shift reactor. More complete removal of carbon dioxide from the process stream using solely the water-gas shift reaction however, is difficult to achieve due to both kinetic and equilibrium limitations. Additional carbon monoxide purifying measures are used to achieve levels of carbon monoxide below 100 ppm in the process gas in the fuel processor. One well-known method utilized to lower the levels of carbon monoxide in hydrogen feed streams includes treatment with "preferential oxidation catalysts" (also known as "Prox" catalysts). These catalysts selectively oxidize residual carbon monoxide in hydrogen gas streams according to the following reaction:

CO + _{1/2}O₂ → CO₂

wherein hydrogen may comprise greater than 60 % by volume of the gas stream composition. An undesirable side reaction in this method is therefore the oxidation of hydrogen according to the following reaction:

H₂ + _{1/2}O₂ → H₂O

In order to consume as little hydrogen as possible, it is preferred that the preferential oxidation process be as selective as possible for the oxidation of carbon monoxide. Some of the factors that influence the selectivity of the oxidation process include the composition of the input gas stream used in the process, the reaction temperature, the space velocity of the input gas stream and the composition of the preferential oxidation catalyst.

Some of the more effective preferential oxidation catalysts used in purifying hydrogen feed streams in fuel reformers, are platinum-based catalysts, e.g., platinum on an alumina support. It is believed that levels of carbon monoxide below 10 ppm often cannot be achieved due to the reverse water-gas shift activity exhibited by the platinum-based catalysts. At the low space velocities of the input gas stream necessary to reach the equilibrium carbon monoxide concentration, the long residence time and the high concentration of hydrogen and carbon dioxide begin to favor the reverse water-gas shift reaction. This combination results in the detrimental formation of carbon monoxide. Such low space velocities are frequently encountered in fuel cell applications since power demands for fuel cells can vary significantly. For instance in vehicular applications, typical driving conditions include periods requiring higher power input (e.g., during acceleration) and periods requiring lower power input (e.g., during deceleration).

An alternative preferential oxidation catalyst is a catalyst containing ruthenium as a catalytic agent, e.g., ruthenium on an alumina support. Ruthenium-based catalysts do not catalyze the reverse water-gas shift reaction, and hydrogen feed streams with levels of carbon monoxide below 10 ppm can be achieved. The temperatures at which the selective oxidation processes using a ruthenium-based catalyst are operated, however, are also favorable for the methanation reaction that occurs with carbon monoxide as shown below.

CO + 3H₂ → CH₄ + H₂O

This undesired side reaction sacrifices three moles of hydrogen for each mole of carbon monoxide converted to methane. Methanation can also occur under these conditions with carbon dioxide according to the equation shown below:

CO₂ + 4H₂ → CH₄ + 2H₂O.

In this side reaction four moles of hydrogen are consumed for each'mole of carbon ' dioxide converted to methane. Moreover, the methanation reactions accelerate with increasing catalyst bed temperatures. This property presents a liability, as the exothermic reaction can result in a runaway reaction with carbon dioxide, in addition to carbon monoxide, being inethanated. Major hydrogen loss can occur and the catalyst can be damaged by high temperatures. In addition, methane is a greenhouse gas. The fuel cell is advertised as an emission-free energy producer, and release of methane is undesirable. Methane is difficult to combust during normal operating conditions of the fuel cell, so producing an appreciable quantity of methane is environmentally unfavorable.

EP-A-1 038 832 discloses a carbon monoxide selective oxidation catalyst having ruthenium as primary component on a carrier, and further including zinc.

US-A-4 177 219 discloses a calcined catalyst comprising 0,1-5 wt% ruthenium and 0,1-10 wt% of a zinc component.

### Summary of the Invention

The invention relates to a process for the preferential oxidation of carbon monoxide from an input gas stream containing carbon monoxide, hydrogen, and oxygen. The process is defined in claim 1. This oxidation process includes the step of contacting the input gas stream with a catalyst having from 1 to 10 wt.% of a ruthenium component and 0.5 to 10 wt.% of zinc oxide. The process is conducted with a catalyst having a refractory oxide support other than zinc oxide (e.g., activated alumina) on which at least some of the ruthenium component and at least some of the zinc oxide is supported.

In preferred embodiments, the catalyst has from 2.0 to 8.0 wt.% of a ruthenium component (particularly from 2.0 to 5.0 wt.% of a ruthenium component) and at least 1 wt.% of zinc oxide.

The refractory oxide support is preferably selected from the group consisting of zirconia, stabilized zirconia, ceria, stabilized ceria, ceria-zirconia, titania, alumina, stabilized alumina, silica-alumina and silica. In preferred embodiments the refractory oxide support is alumina, more preferably activated alumina.

In some embodiments, the catalyst is in the form of a washcoat composition deposited on a substrate. The substrate can be a honeycomb monolith, a foam, a heat exchanger, a screen, a mesh, an inert pellet, a tube, or a surface of a fuel cell component which defines or is in train with a gas conduit. The substrate can be constructed from metallic or ceramic materials. Preferably, the substrate is a ceramic or metallic honeycomb monolith.

In other preferred embodiments, the oxidation process is conducted at a temperature less than 300 °C. More preferably, the process is conducted at a temperature of from about 100 °C to 300 °C.

In another aspect, the invention relates to a process for removing carbon monoxide from an input gas stream containing carbon monoxide, hydrogen and oxygen using at least two preferential oxidation catalysts. The multi-step oxidation process includes a step of contacting the input gas stream with at least one upstream preferential oxidation catalyst to produce a first outlet gas stream. The upstream preferential oxidation catalyst is operable to produce a carbon monoxide concentration of less than 1000 ppm in the first outlet gas stream. In a later step, the first outlet gas stream is contacted with a downstream preferential oxidation catalyst to produce a second outlet gas stream. The downstream preferential oxidation catalyst is as described above.

### Brief Description of the Drawing

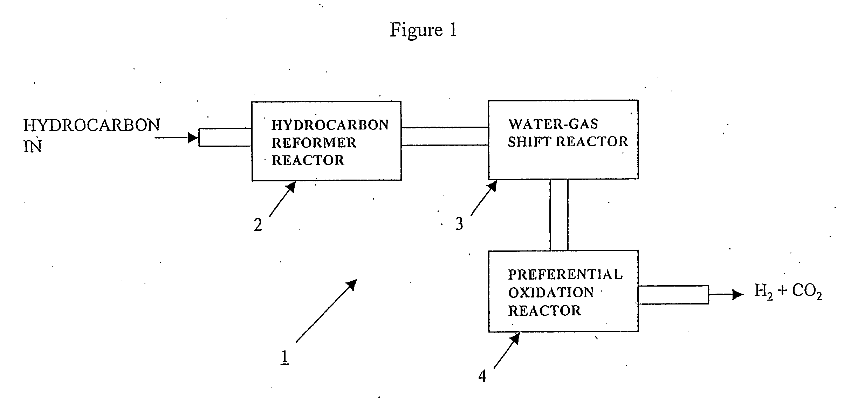

**Figure 1** is a depiction of one embodiment of fuel processor unit for supplying hydrogen to a fuel cell.

### Definitions

The definitions of certain terms used herein are as follows:
"activated alumina" means a high BET surface area alumina, for example greater than 10 m²/g, preferably greater than 150 m²/g having primarily one or more of gamma, theta and delta aluminas.
"BET surface area" means the Brunauer, Emmett, Teller method for determining surface area by N₂ adsorption. Unless otherwise specifically stated, all references herein to the surface area refer to the BET surface area.
"catalytically effective amount" means that the amount of material present is sufficient to affect the rate of reaction of the water gas shift reaction in the sample being treated.
"high surface area support" means support materials with a BET surface area that is approximately greater than 10 m²/g, preferably greater than 150 m²/g.
"incipient wetness impregnation" means the impregnation of the catalyst support with a volume of metal salt solution substantially equal to the pore volume of the support material.
"inlet temperature" shall mean the temperature of test gas, fluid sample or fluid stream being treated immediately prior to initial contact of the test gas, fluid sample or fluid stream with a catalyst composition.
"input gas stream" means a gas stream prior to passing through a catalytic region or prior to initial contact with a catalyst composition.
"monolith substrates" refer to structures prepared from refractory materials (e.g., metallic, ceramic) upon which washcoat compositions are deposited. The term shall include substrates of the honeycomb type and foams.
"percent by volume" refers to the amount of a particular gas component of a gas stream, unless otherwise indicated, means the mole percent of the gas component of the gas stream as expressed as a volume percent.
"ruthenium component" refers to ruthenium or an oxide thereof.
"supports" or "catalyst support" refer to particulate materials that are part of the catalyst composition including inorganic oxides including refractory oxide support selected from the group consisting of activated alumina, zirconia, titania, silica, zeolites and combinations thereof.
"VHSV" means volume hourly space velocity; that is, the flow of a reactant gas in liter per hour per liter of catalyst volume at standard temperature and pressure. In embodiments of the invention that include a monolith substrate, the determination includes the volume of the monolith substrate.
"wt.%." or "percent by weight", means weight percent based on the weight of an analyte as a percentage of the total catalyst weight, including the support and any material impregnated therein. The wt.% of the ruthenium component is calculated on the basis of the atomic weight of ruthenium. The wt.% of zinc oxide is calculated on the basis of the atomic weight of zinc. The calculation does not include the monolith substrate in embodiments where the catalyst is in the form of a washcoat composition deposited on a monolith substate.

### Detailed Description of the Invention

Applicants have found that addition of effective amounts of a zinc component to ruthenium-based catalysts can reduce or prevent the unwanted methanation side reaction that would otherwise accompany carbon monoxide oxidation in hydrogen streams at higher operating temperature ranges (e.g., >130 °C) ofruthenium-based catalysts. These ruthenium-based catalysts thus provide a higher effective operating temperature range where selective carbon monoxide oxidation can occur without sacrificing hydrogen yield in the output hydrogen stream. In addition, the catalysts are able to operate with significant carbon monoxide conversion efficiency and selectivity at very low space velocities. Among other things, the catalysts thus provide operating parameters that make them particularly useful for incorporation into final stage catalyst beds (known as "polishing beds") in multiple stage oxidation reactors.

The ruthenium-based catalyst compositions employ ruthenium as a catalytic agent and include concentrations of zinc effective to suppress the methanation that typically accompanies treatment of gas streams containing hydrogen and carbon monoxide and/or carbon dioxide with ruthenium-based catalysts. The catalysts are disposed on a refractory inorganic oxide supports that are impregnated with ruthenium and zinc. The catalysts can be in any form, including tablets, extrudates and washcoat compositions deposited on substrates.

In a catalyst composition for use in the invention, there is 1 to 10 wt.% of a ruthenium component in the catalyst to serve as a catalytic agent. Preferably there is 2 to 8 wt.% of ruthenium in the catalyst composition. More preferably, there is from 2 to 5 wt.% ruthenium in the catalyst composition. The ruthenium is generally dispersed on the inorganic oxide support, e.g., alumina, by contacting the support with a water-soluble or water-dispersible salt of ruthenium (e.g., ruthenium nitrate) for sufficient time to impregnate the support. Other non-limiting examples of ruthenium salts that could be used for the impregnation step include ruthenium chloride, ruthenium iodide, ammonium chlororuthenate, ruthenium hydroxide, and potassium ruthenate. The impregnated support is then dried and calcined, preferably at temperatures below 300 °C to convert the ruthenium component to ruthenium oxide. The calcination step can also be performed after impregnation after impregnation of the support with the zinc component.

The catalyst compositions for use in the invention also include zinc oxide. There is from 0.5 to 10 wt.% of zinc oxide in the catalyst composition. Preferably, there is from 1.0 to 8.0 wt.% of zinc oxide in the catalyst composition. More preferably, there is from 1.0 to 5.0 wt.% of zinc oxide in the catalyst composition. Zinc can be incorporated into the catalyst composition by incipient wetness impregnation. For example, the zinc is generally dispersed on the inorganic oxide support by contacting the support containing ruthenium (obtained as described above) with a water-soluble (e.g., zinc nitrate, zinc acetate) or water-dispersible salt of zinc for sufficient time to impregnate the support. The support material containing the zinc and ruthenium is then dried and calcined, preferably at a temperature below 3 00 °C to convert the water-soluble or water-dispersible zinc salt to an oxide.

Useful inorganic oxide supports include high surface area refractory oxide supports. These refractory oxide supports include, for example, activated alumina, zirconia, titania, silica, zinc oxide and zeolites. Other useful supports include combinations of these inorganic oxides such as stabilized forms of alumina including composites of zirconia, or silica with alumina, for example, alumina-zirconia, silica-alumina, stabilized zirconia, cerium oxide, stabilized cerium oxide (particularly ceria-zirconia) and alumino-silicates.

In preferred embodiments of catalyst composition, the support is substantially comprised of alumina which preferably includes the members of the gamma or activated alumina family, such as gamma and eta aluminas, and, if present, a minor amount of other refractory oxides, e.g., up to about 20 wt.% of silica, zirconia and titania. Preferably, the activated alumina has a specific surface area of at least 10 m²/g. More preferably, the activated alumina has a specific surface area of at least 150 m²/g.

In embodiments wherein the catalysts are in the form of washcoat compositions, extrudates and tablets, the catalyst are preferably formed from powdered supports impregnated with the ruthenium and zinc components (wherein the support is other than zinc oxide).

Washcoat compositions (or "slurries") of the catalyst for deposition on substrates are prepared using methods known in the art. Preferably, the impregnated oxide support is ball milled as a suspension using sufficient water to prepare a slurry of a desired concentration. The concentration of the solids in the washcoat slurry can be used as a method to control the thickness of the catalyst coating ultimately deposited on the monolith substrate. For example, increasing the weight percentage of solids in the aqueous slurry will result in a thicker catalytic coat.

It is also generally advantageous to prepare slurries having particles of small particle sizes, e.g., less than 10 µm, to maximize the surface area of the catalyst upon deposition on the substrate. Therefore, the particle size distribution of the slurry is typically measured, and milling is continued until the desired particle size has been achieved. Binders such as hydrated forms of alumina, e.g., pseudoboehmite, are optionally included in the slurries to improve adherence of the washcoat to the substrate walls.

The washcoat slurries are deposited on the substrates by methods well-known to those of ordinary skill. Thus, for example, in a typical honeycomb substrate preparation, a layer of the supported ruthenium-based catalyst can be prepared by dipping the substrate in a reservoir containing a sufficient volume of the slurry so that the substrate is fully immersed. The coated substrate can be subsequently dried and calcined.

As mentioned above, the washcoat catalyst compositions are disposed on substrates to form coated monolith substrates. Although a variety of monolith substrates could be used, the substrate is preferably of the type with one or more monolithic bodies having a plurality of finely divided gas flow passages (channels) extending there through. Preferably, the monolith substrate is of the type having a plurality of fine, parallel gas flow passages extending across the longitudinal axis of the substrate from an inlet or an outlet face, so that the channels are open to fluid flow there through (often referred to as a "honeycomb substrate"). The passages, which are essentially straight from the inlet and outlet of the substrates, are defined by walls on which the catalyst composition can be coated in washcoat compositions so that the gases flowing through the passages contact the catalyst material.

Monolithic, honeycomb substrates are commercially available in various sizes and configurations. The flow passages of the monolithic substrate are thin-walled channels which can be of any suitable cross-sectional shape and size such as trapezoidal, rectangular, square, sinusoidal, hexagonal, oval, circular. Such monolithic substrates may contain up to about 108 or more flow channels ("cells") per square cm of cross section 700 cells per square inch ("cpsi"), although far fewer may be used. For example, the substrate can have from about 9.3 to 93, more usually from about 31 to 62, cells per square cm (60 to 600, more usually 200 to 400, cpsi.

Various types of materials of construction for honeycomb substrates are known. The honeycomb substrate can be made from a variety of materials, including metal or ceramic monoliths. In some embodiments, the monolith substrate can be made from ceramic porous material composed of one or more metal oxides, e.g., alumina, alumina-silica, alumina-silica-titania, mullite, cordierite, zirconia, zirconia-ceria, zirconia-spinel, zirconia-mullite, silicon-carbide, and the like. Some non-limiting examples of ceramic monoliths can include those made of: zirconium, barium titanate, porcelain, thorium oxide, magnesium oxide, steatite, boron or silicon carbonates, cordierite-alpha alumina, silicon nitride, spodumene, alumina-silica magnesia, zircon silicate, sillimanite, magnesium silicates, zircon, petalite, alpha alumina and aluminosilicates. One example of a commercially available material for use as the substrate for the present invention is cordierite, which is an alumina-magnesia-silica material.

The metallic monolith substrate can be a honeycomb substrate made of a refractory metal such as a stainless steel or other suitable iron based corrosion resistant alloys (e.g., iron-chromium alloy). Metal monoliths can be produced, for example, from alloys of chromium, aluminum and cobalt, such as those marketed under the trademark KANTHAL, or those produced from alloys of iron, chromium, aluminum and yttrium, marketed under the trademark of FECRALLOY. The metal can also be carbon steel or simple cast iron. Monolith substrates are typically fabricated from such materials by placing a flat and a corrugated metal sheet one over the other and rolling the stacked sheets into a tubular configuration about an axis parallel to the configurations, to provide a cylindrical-shaped body having a plurality of fine, parallel gas flow passages, which can range, typically, from about 31 to about 186 per square cm (200 to about 1,200 per square inch) of face area. Heat exchangers, which are typically formed from metallic materials, can also be used as the monolith structures.

In other embodiments, the substrate can be made of a ceramic or metal foam. Substrates in the form of foams are well known in the prior art, e.g., see United States Patent No. 3,111,396.

The invention also relates to processes for using the ruthenium-based catalysts of the invention. In preferred embodiments, the catalysts of the invention are used as preferential oxidation catalysts in processes for the selective oxidation of carbon monoxide in a hydrogen gas stream. For example, the catalysts of the invention can be incorporated in a reactor that is charged with an input gas stream containing hydrogen and carbon monoxide to produce an output hydrogen stream that contains substantially lower levels of carbon monoxide. For example, levels that meet fuel cell specifications for a hydrogen feed stream can be achieved using the selective oxidation processes of the invention.

The composition of the input gas stream for the process can vary depending on the source of the hydrogen gas stream. For instance, in fuel cell applications the input gas stream for the process can include carbon dioxide, steam, and nitrogen in addition to hydrogen and carbon monoxide. Minor amounts of hydrocarbon can also be present.

In fuel cell applications of the inventive process, the input gas streams typically contain at least 10% by volume of hydrogen, and more typically from about 40 to 70% of hydrogen on a dry basis in addition to the carbon monoxide. The input gas stream also typically contains from about 10 to 25% by volume of carbon dioxide. In addition, there is typically from about 10 to about 30% by volume of added steam (i.e., gaseous H₂O) in the input hydrogen gas streams in fuel processors. These levels of steam in the input gas stream can be accommodated by the process of the.invention.

The reaction temperature of the inventive, selective oxidation process can be adjusted to optimize the reaction rate, carbon monoxide conversion and selectivity. For instance, lower reaction temperatures favor increased selectivity for carbon monoxide oxidation for a gas compositions at the same space velocity and O₂/CO ratio. Higher temperatures, however, are useful for achieving adequate carbon monoxide conversion for input hydrogen streams at higher space'velocities. In fuel cell applications, preferred operating temperatures for the process of the invention are from about 120 tp 150°C, with a more preferred range of from 120 to 130 °C.

Reaction zone pressure is preferably maintained below the dew point pressure of the reaction mixture. It should be recognized that lower or higher reaction zone pressures can be used such as from atmospheric up to about 3.5 MPa (500 psig).

Preferably, the selective oxidation process is carried out in a continuous mode with the reactants being passed over the catalyst contained in one or more reaction zones. Gaseous hourly space velocities of about 500 to about 50,000 hr⁻¹ VHSV measured on the basis of dry gas under standard conditions are particularly suitable for most fuel cell operations. In embodiments wherein the catalysts are in the form of washcoat compositions deposited on monolith substrates, space velocities of up to 100,000 hr⁻¹ VHSV can be accommodated. Preferred operating ranges wherein the catalyst compositions are deposited on a monolith substrate are 500 to 30,000 hr⁻¹. One skilled in the art would recognize that lower gas reactant flow rates favor more complete carbon monoxide conversion.

The selective oxidation processes of the invention can accommodate a range of carbon monoxide concentrations in the input hydrogen stream, depending on the output carbon monoxide concentration requirements of a particular application. In fuel cell processors the concentration of carbon monoxide in the reformate gas stream that serves as the input stream to the preferential oxidation reactors is generally from 0.05 to 3% by volume.

The molar ratio of oxygen to carbon monoxide in the input gas stream (Q₂/CO ratio) to the process can be adjusted to optimize carbon monoxide conversion and the selectivity of the oxidation reaction. For example, one of skill in the art will recognize that higher O₂/CO ratios typically favor higher carbon monoxide conversions. Lower O₂/CO ratios, however, favor more selective oxidation of carbon monoxide instead of hydrogen. This ratio can be adjusted according to the particular requirements of the application. In fuel cell applications, the O₂/CO ratio is preferably from 0.25 to 5, and more preferably from about 0.5 to 3.

Higher levels of carbon monoxide in the input hydrogen gas stream can be accommodated by variation of certain process parameters. Although less desirable from the standpoint of hydrogen fuel conservation, a higher carbon monoxide conversion can be achieved at the expense of consuming hydrogen, for example, by increasing the inlet temperature or increasing the O₂/CO ratio.

More preferably, the process of the invention can conducted by staging the oxidation reaction into two or more catalyst beds. In this arrangement, the input gas stream containing hydrogen and a level of carbon monoxide would contact a first catalyst bed (or upstream catalyst bed) to produce an intermediate gas stream that would contain a reduced level of carbon monoxide. The intermediate gas stream would then contact a second catalyst bed to produce an outlet gas stream containing still lower levels of carbon monoxide. The operating parameters (e.g., temperature, O₂/CO ratio, space velocity) for each of the catalyst stages can be altered to optimize the operating conditions for a particular type of catalyst. Additional catalyst stages could be provided until the desired carbon monoxide threshold is achieved. The final catalyst bed of a series of catalyst beds that removes residual carbon monoxide to achieve a level below a desired threshold value is often referred to as a "polishing bed".

In a preferred embodiment, the ruthenium-based catalysts are incorporated into polishing beds, where the bulk of the carbon monoxide is removed from the hydrogen stream in one or more upstream oxidation catalyst beds. The one or' more upstream oxidation catalyst beds can incorporate different catalyst compositions, e.g., platinum-based catalysts or base metal-based catalysts (e.g., copper-based catalysts), that convert the bulk of the carbon monoxide in the gas stream. Selection of the upstream catalyst beds can be based on a number of considerations including selectivity and cost.

Typically, the output gas stream from these upstream catalyst beds are at temperatures that are about 90 to 150 °C. Gas streams in this temperature range can be effectively treated by the catalysts of the invention to produce carbon monoxide concentrations with <50 ppm, and under many conditions <10 ppm in the outlet gas stream. As the ruthenium-based catalysts can effectively operate in this higher temperature range, it is typically unnecessary to include additional steps and cooling structures to cool the incoming gas stream. The operating temperature range therefore provides a reduction in both reactor volume and cost over configurations that incorporate other types of catalysts in the polishing stage.

Although the preferential oxidation catalysts can be used in any application where it is desired to remove carbon monoxide from a hydrogen-containing gas stream, a particularly useful application is in apparatus such as fuel processors that supply hydrogen to fuel cells. These processors typically comprise a series of reactors that convert hydrocarbon fuels (e.g., natural gas, gasoline, fuel oil, liquid petroleum gas, and the like) into hydrogen fuel. The conversions that take place in the reactors typically include reforming reactions and water-gas shift reactions to produce hydrogen. Other reactors and trapping devices can also be included in the apparatus that reduce unwanted components in the hydrogen feed streams (e.g., sulfur components), that are ultimately supplied to the fuel cell. Preferential oxidation reactors, where the selective oxidation of carbon monoxide is conducted, is typically performed as a finishing step to polish the hydrogen feed stream of residual carbon monoxide.

As seen in a typical fuel processor (1) depicted in Figure 1, the hydrocarbon reformer reactor (2) converts hydrocarbons (e.g., methane) and steam into hydrogen, carbon monoxide, and carbon dioxide as described above. The resulting gas is then reacted in the water-gas shift reactor (3) to enrich the process gas further in hydrogen, through the reaction of carbon monoxide with steam. Residual carbon monoxide in the process stream is then removed by selective oxidation of carbon monoxide in the preferential oxidation reactor (4). The resulting process stream comprising high levels of hydrogen is then supplied to the fuel cell.

The following examples further illustrate the present invention but, of course, should not be construed as in any way limiting its scope. The concentration of specific components of gas compositions, other than steam, are expressed either as volume percentages or as parts per million (ppm) on a dry basis. The concentration steam is indicated as a percentage of added steam. The flow rate of the test gases were adjusted to achieve the specified space velocities. The concentration of carbon monoxide in the output gas was detected in the examples using an infrared gas analyzer (Siemens Applied Automation) and the O₂ was detected using an electrochemical analyzer (Advanced Instruments). The methane concentration in the output gas was determined using a flame ionization detector (Rosemount 440A hydrocarbon analyzer).

### Example 1: Preparation of a Ruthenium/Zinc Oxide Alumina-supported Oxidation Catalyst

### A. Preparation of 5 wt.% Ru/1% wt.% Zn on an Alumina Support, Monolith (Catalyst A1)

131 g of alumina powder (SBA 150 alumina) was impregnated with 137.2 g of ruthenium nitrate (to yield a final concentration of 5.02 wt.% Ru in the composition) in water using the incipient wetness method. The powder was dried overnight at 120 °C. The powder was then impregnated with a solution of zinc nitrate (4.2 M, 6.17 mL, to yield a final concentration of 1 wt.% Zn) and deionized water (81.1 mL) and dried overnight at 120 °. Pseudoboehmite (14 g, P3) and deionized water (200 mL) were added to the powder. The slurry was then ball milled until 90% of the particles were <10 µm.

A weighed suction of cordierite monolith of 62 cells per square cm (400 cells per square inch (cpsi)) with a length of 7.5 cm (3 in) and a diameter of 1.9 cm (3/4 in) was dipped into the slurry. The excess slurry was removed using forced air. The monolith was dried at 120 °C for 2 hours, then calcined at 300 °C for 2 hours. After cooling, the final weight was measured. By difference, the dry gain was found to be 0.12 g/cm³ (1.88. g/in³). A replicate piece had 0.11 g/cm³ (1.74 g/in³). This catalyst is designated as Catalyst A1.

### B. Preparation of 5 wt.% Ru/5 wt. % Zn on an Alumina Support, Monolith (Catalyst A2)

144 g of alumina (SBA 150) was impregnated with 142.0 g of ruthenium nitrate (to yield a concentration of 5.02 wt.% Ru in the final composition). The powder was dried overnight at 110 °C. The powder was then impregnated with a solution of zinc nitrate (33.8 mL of 4.2M zinc nitrate plus 57.9 mL of deionized water) to yield a concentration 5 wt.% Zn. Pseudoboehmite (17 g) and deionized water (200 mL) were added to the powder. The resulting slurry was then ball milled until 90% of the particles were < 10 µm.

A weighed section of cordierite monolith of 62 cells per square cm (400 cpsi) with a length of 7.5 cm (3 in) and a diameter of 1.9 cm (3/4 in) was dipped into the slurry. The excess slurry was removed using forced air. The monolith was dried at 120 °C for 2 hours, then calcined at 300 °C for 2 hours. After cooling, the final weight was measured. By difference, the dry gain was found to be 0.104 g/cm³ (1.71 g/in³). A replicate piece had 0.12 g/cm³ (1.97 g/in³). This catalyst is designated as Catalyst A2.

### C. Preparation of 5 wt.% Ru on an Alumina Support, Monolith (Catalyst B2)

151 g of alumina (SBA 150) was impregnated with 137.9 g of ruthenium nitrate (to yield a concentration of 5.02 wt.% Ru in the final composition). ). The powder was dried overnight at 120 °C. Pseudoboehmite (15 g) and deionized water (200 mL) were added to the powder. The resulting slurry was then ball milled until 90% of the particles were <10 µm.

A weighed section of cordierite monolith of 62 cells per square cm (400 cpsi) with a length of 7.5 cm (3 in) and a diameter of 1.9 cm (3/4 in) was dipped into the slurry. The excess slurry, was removed using forced air. The monolith was dried at 120 °C for 2 hours, then calcined at 300 °C for 2 hours. After cooling, the final weight was measured. By difference, the dry gain was found to be 0.114 g/cm³ (1.88 g/in³). This catalyst is designated as Catalyst B2.

### D. Preparation of 2.5 wt. % Ru on an Alumina Support, Monolith (Catalyst B1)

165 g of alumina (SBA 150) were impregnated with 85.5 g of ruthenium nitrate diluted with 48 mL of deionized water (to yield a concentration of 5.02 wt.% Ru in the final composition). The powder was dried overnight at 120 °C. Pseudoboehmite (16 g) and deionized water (200 mL) were added to the powder. The resulting slurry was then ball milled until 90% of the particles were <10 µm.

A weighed section of cordierite monolith of 62 cells per square cm (400 cpsi) with a length of 7.5 cm (3 in) and a diameter of 1.9 cm (3/4 in) was dipped into the slurry. The excess slurry was removed using forced air. The monolith was dried at 120 °C for 2 hours, then calcined at 300 °C for 2 hours. After cooling, the final weigh was measured. By difference, the dry gain was found to be 0.110 g/cm³ (1.81 g/in³). This catalyst is designated as Catalyst B1.

### Example 2: Determination of Methanation of Ruthenium-Based Catalysts

The monolith catalysts of Example 1 were evaluated for their methanation liability when exposed to a test gas composition that modeled a reformate gas stream. The monolith substrates were placed in a quartz tube reactor 2.54 cm (1 inch) diameter) and exposed to a test gas. The test gas had a dry gas composition of 500 ppm CO, 15% CO₂, 50% H₂ and the balance was N₂. 25% Steam was added as a diluent. Air was added as a source of oxygen to achieve a O₂/CO ratio of 3. The space velocity of the test gas composition was 12 k/hr. The temperature of the test gas (inlet temperature) was varied between 100 and 180 °C to determine the methane (expressed as ppm) at each temperature presented in Table 1.

**Table 1**

| Inlet Temp (°C) | B1 (2.5 wt.% Ru 0 wt.% Zn) CH₄ (ppm) | B2 (5 wt.% Ru 0 wt.% Zn) CH₄ (ppm) | A1 5 wt.% Ru 1 wt.% Zn) CH₄ (ppm) | A2 (5 wt.% Ru 5 wt.% Zn) CH₄ (ppm) |
|---|---|---|---|---|
| 100 | | 110 | | |
| 110 | | 150 | | |
| 120 | 10 | 220 | 40 | |
| 130 | 20 | 330 | 70 | 10 |
| 140 | 40 | 480- | 140 | 20 |
| 150 | 80 | 700 | 280 | 40 |
| 160 | 150 | 1050 | 510 | 75 |
| 170 | 300 | 1550 | 860 | 125 |
| 180 | 500 | 2500 | 1350 | 200 |

The data clearly show that the ruthenium catalyst (Catalyst B1) without zinc strongly promotes the methanation reaction, with over 100 ppm of methane produced at an inlet temperature of 100 °C, a typical operating temperature for a preferential oxidation catalyst. Moreover, the rate of methanation increases almost geometrically with increasing inlet temperatures. With the addition of 1 wt.% of zinc (Catalyst A1), the temperature has to be raised above 130 °C before 100 ppm of methane are observed. By adding 5 wt.% of zinc to the ruthenium catalyst (Catalyst A2), the temperature has to exceed 160 °C before at least 100 ppm of methane is observed. For comparison purpose, the methanation data for a 2.5 wt.% ruthenium catalyst (Catalyst B1) is presented. In this case, an inlet temperature of about 150 °C was needed before a methane content above 100 ppm of methane was observed, however the slope of the methane content versus temperature curve was still sharply increasing at this point.

### Example 3: Determination of CO Conversion and Selective Oxidation Properties of the Ruthenium-based Catalysts of Example 1

The catalysts of Example 1 and a comparative, platinum-based catalysts were tested for their carbon monoxide conversion and selectivity when exposed to a test gas composition that modeled a reformate gas stream. The carbon monoxide concentration of the test gas composition was varied. The test gas also contained of 15% CO₂, 50% H₂ and the balance was N₂ on a dry basis. 25% Steam was added as a diluent. Air was added as a source of oxygen, which was varied during the experiments. The inlet temperature and space velocities were varied at a range of operating conditions.

| Run # / Catalyst | wt.% Ru | wt.% Zn | inlet [CO] (ppm) | inlet Temp (°C) | Space Velocity | O₂/CO | outlet [CO] (ppm) | outlet CH₄ (ppm) |
|---|---|---|---|---|---|---|---|---|
| 1. Pt/Fe | - | - | 3000 | 90-95 | 30 k/hr | 1.4 | <10 | - |
| 2. Pt/Fe | - | - | 750 | 90 | 6 k/hr | 2 | 15 | - |
| | | | | | | | | |
| 3. B2 | 5 | 0 | 3000 | 100 | 30 k/hr | 1.5 | 100 | 100 |
| 4. B2 | 5 | 0 | 6000 | 110 | 5500 /hr | 1.67 | 320 | NR* |
| 5. B2 | 5 | 0 | 500 | 130 | 12 k/hr | 3 | <1 | 330 |
| | | | | | | | | |
| 6. A1 | 5 | 1 | 3000 | 90 | 30 k/hr | 1.5 | drifting | NR |
| 7. A1 | 5 | 1 | 3000 | 130 | 30 k/hr | 1.5 | 35 | NR |
| 8. A1 | 5 | 1 | 3000 | 120 | 30 k/hr | 1.75 | 13 | NR |
| 9. A1 | 5 | 1 | 750 | 130 | 50 k/hr | 4 | 10 | NR |
| 10. A1 | 5 | 1 | 600 | 150 | 50 k/hr | 3.5 | 12 | 150 |
| 11. A1 | 5 | 1 | 600 | 150 | 12 k/hr | 3.5 | 4 | 240 |
| | | | | | | | | |
| 12. A2 | 5 | 5 | 400 | 120 130 | 12 k/hr | 3 | <2 | 10 |
| 13. A2 | 5 | 5 | 450 | 130-170 | 12 k/hr | 3 | <7 | 125@ |
| | | | | | | | | 170 °C |
| | | | | | | | | |
| 14. B1 | 2.5 | 0 | 500 | 150 | 12 k/hr | 3 | 3 | 80 |

| | | | | | | | | |
|---|---|---|---|---|---|---|---|---|
| *NR = not run | | | | | | | | |

When the test gas stream contained higher inlet concentrations of carbon monoxide, i.e., >1000 ppm, the observed outlet gas in the trials promoted by Catalyst A2 achieved conversions of CO above 98% at temperatures at or above 120 °C (see trials 7 and 8). At higher space velocities the comparative Pt/Fe catalyst showed similar CO conversion performance (Trial 1). The oxidation selectivity observed with the Pt/Fe catalyst was slightly better as the O₂/CO ratio did not need to be raised above 1.4 to achieve high CO conversion.

When the test gas contained lower concentrations of carbon monoxide, i.e., <1000 ppm, the output gases obtained in the runs promoted by the Catalysts A1 and A2 consistently met low CO output specifications at both high and low space velocities. For example, at a space velocity of 50 k/hr the CO concentration from a test gas stream containing 750 ppm of CO was lowered to 10 ppm in the outlet stream in the trial promoted by Catalyst A1 (Trial 9, at an O₂/CO ratio or 4:1 and inlet temperature of 130 °C). At a space velocity of 12 k/hr with a test gas composition of 600 ppm of CO, the CO observed in the outlet stream was 4 ppm (run 11).

With an increased concentration of zinc in the ruthenium catalyst composition the reduction in CO concentration from the test gas stream was achieved with lower methane output. For example, in trials promoted by Catalyst A2 (containing 5 wt.% Zn) for a test gas composition containing 400 ppm of CO at a space velocity of 12 k/hr, the output gas stream contained <2 ppm of CO with <12 ppm of methane at 120-130 °C (run 12). The low concentration of CO output with minimal methane formation was maintained when the temperature was increased to 170 °C (run 13). In addition to their ability to meet a low CO output specification (50 ppm or lower) with minimal air injection, the catalysts of the invention also showed better performance in terms of achieving low CO output without significant methanation (i.e., >150 ppm) at higher inlet gas temperatures (e.g., >130 °C) than the zinc-free catalyst, e.g., Catalyst B1. Higher effective operating ranges for catalysts in the polishing bed are advantageous since the adiabatic temperature increase in the output gas associated with the one or more upstream catalyst beds would dovetail well with the operating range of a Ru/Zn catalyst bed.

## Claims

1. A process for the preferential oxidation of carbon monoxide from an input gas stream comprising carbon monoxide, hydrogen, and oxygen, wherein the process comprises contacting the input gas stream with a catalyst composition comprising:
from 1 to 10 wt. % of a ruthenium component;
from 0.5 to 10 wt. % of zinc oxide; and
a refractory oxide support, other than zinc oxide, on which at least some of the ruthenium component and the zinc oxide is supported.

2. The process of claim 1 wherein the catalyst composition is in the form of a washcoat composition deposited on a substrate.

3. The process of claim 1, wherein the said input gas stream is at a temperature less than 300°C.

4. The process according to claim 1 comprising, prior to the step recited in claim 1, contacting the said gas stream with at least one upstream preferential oxidation catalyst, which is operable to produce a carbon monoxide concentration of less than 1000 ppm.

## Patentansprüche

1. Verfahren zur selektiven Oxidation von Kohlenstoffmonoxid aus einem Einsatzgasstrom umfassend Kohlenstoffmonoxid, Wasserstoff und Sauerstoff, wobei das Verfahren das in Kontakt zu bringen des Einsatzgasstromes mit einer Katalysatorzusammensetzung umfasst, umfassend:
von 1 bis 10 Gew.% eines Rutheniumbestandteils;
von 0,5 bis 10 Gew.% Zinkoxid; und
einen anderen feuerfesten Oxidträger als Zinkoxid, auf welchem wenigstens etwas des Rutheniumbestandteils und des Zinkoxids getragen wird.

2. Verfahren nach Anspruch 1, wobei die Katalysatorzusammensetzung in der Form einer Washcoat-Beschichtung abgeschieden auf einem Substrat vorliegt.

3. Verfahren nach Anspruch 1, wobei der Einsatzgasstrom eine Temperatur von weniger als 300°C aufweist.

4. Verfahren nach Anspruch 1 umfassend, vor dem in Anspruch 1 angegebenen Schritt, das In-Kontakt-bringen des Gasstromes mit wenigstens einem stromaufwärts angeordneten selektiven Oxidationskatalysator, welcher betrieben werden kann, um eine Kohlenstoffmonoxidkonzentration von weniger als 1000ppm zu erzeugen.

## Revendications

1. Procédé d'oxydation préférentielle de monoxyde de carbone à partir d'un courant de gaz d'entrée comprenant du monoxyde de carbone, de l'hydrogène et de l'oxygène, dans lequel le procédé comprend la mise en contact du courant de gaz d'entrée avec une composition de catalyseur comprenant :
➢ de 1 à 10 % en poids d'un composant de ruthénium ;
➢ de 0,5 à 10 % en poids d'oxyde de zinc ; et
➢ un support d'oxyde réfractaire, autre que l'oxyde de zinc, sur lequel au moins une partie du composant de ruthénium et de l'oxyde de zinc est supportée.

2. Procédé selon la revendication 1, dans lequel la composition de catalyseur est sous la forme d'une composition d'imprégnateur, déposée sur un substrat.

3. Procédé selon la revendication 1, dans lequel ledit courant de gaz d'entrée est à une température inférieure à 300°C.

4. Procédé selon la revendication 1, comprenant, avant la phase indiquée dans la revendication 1, la mise en contact dudit courant de gaz avec au moins un catalyseur d'oxydation préférentielle en amont, qui peut être utilisé pour produire une concentration de monoxyde de carbone inférieure à 1 000 ppm.
